Europäisches Patentamt

European Patent Office

Office européen des brevets

(11) Numéro de publication: **0 224 424 B1**

## (12) FASCICULE DE BREVET EUROPEEN

(45) Date de publication de fascicule du brevet: **19.02.92**　(51) Int. Cl.⁵: **A01D  90/02**, A01D 89/00

(21) Numéro de dépôt: **86440096.5**

(22) Date de dépôt: **06.11.86**

Demande divisionnaire 89121967.7 déposée le 06/11/86.

(54) **Dispositif de ramassage de végétaux se trouvant sur le sol.**

(30) Priorité: **08.11.85 FR 8516812**

(43) Date de publication de la demande:
**03.06.87 Bulletin  87/23**

(45) Mention de la délivrance du brevet:
**19.02.92 Bulletin  92/08**

(84) Etats contractants désignés:
**AT CH DE FR GB IT LI NL SE**

(56) Documents cités:
**EP-A- 0 116 514
WO-A-84/02252
FR-A- 2 520 971**

(73) Titulaire: **KUHN S.A.
4, Impasse des Fabriques
F-67700 Saverne(FR)**

(72) Inventeur: **Haberkorn, Jean-Paul
11, Rue Sainte-Barbe Monswiller
F-67700 Saverne(FR)**

(74) Mandataire: **Andres, Jean-Claude
KUHN S.A. 4, Impasse des Fabriques
F-67700 Saverne(FR)**

Rank Xerox (UK) Business Services

## Description

La présente invention concerne un dispositif de ramassage de végétaux coupés tels que de l'herbe, du foin ou de la paille, se trouvant sur le sol et tel que défini par les caractéristiques du préambule de la revendication 1. Il comporte notamment un arbre support sensiblement horizontal, des éléments de ramassage en forme de segments qui sont fixés sur cet arbre et s'étendent dans des plans sensiblement perpendiculaires à son axe longitudinal, des moyens d'entraînement pour entraîner ledit arbre support en rotation autour de son axe longitudinal durant le travail, les segments de ramassage étant articulés sur des pivots sensiblement parallèles à l'axe de rotation de l'arbre support

De tels dispositifs peuvent équiper les machines de récolte telles que les presses, les ensileuses ou les remorques autochargeuses et servent à prélever les végétaux au sol et à les amener vers un dispositif de transport ou de réception de ces machines.

Les dispositifs équipés de segments de ramassage ont le grand avantage de ne plus posséder de dents ou fourches de ramassage métalliques qui peuvent se briser facilement et causer d'importants dégâts aux machines de récolte en restant dans les végétaux.

Des dispositifs munis de tels segments de ramassage sont connus dans la demande de brevet EP-A-0 116 514. Ils présentent toutefois encore des inconvénients qui entravent leur généralisation. Par exemple, ils nécessitent un très grand nombre de segments pour assurer une arrivée régulière de végétaux à la machine de récolte. De plus, ces segments de ramassage sont fréquemment déchirés ou même arrachés lorsqu'ils rencontrent des obstacles. Ceci entraîne des frais d'entretien et de remplacement assez élevés. Enfin, ces dispositifs connus sont souvent agressifs à l'égard de produits secs tels que du foin.

La présente invention a notamment pour but d'obvier aux inconvénients des dispositifs connus.

A cet effet, l'invention est caractérisée en ce que les segments de ramassage peuvent se déplacer autour de ces pivots en direction dudit axe de rotation lorsqu'ils rencontrent un obstacle et qu'à chacun de ces segments de ramassage est associé un ressort qui exerce une pression sur lui de manière à le maintenir en position de travail. Ces segments de ramassage peuvent ainsi s'escamoter en direction dudit axe de rotation, à l'encontre de la pression des ressorts, pour passer les obstacles. Cela évite que les segments se plient vers les côtés et frottent à plat sur les obstacles ou les glissières de guidage des végétaux durant le travail. Ce montage améliore ainsi la capacité des segments à suivre les dénivellations du sol et permet de réduire le risque d'arrachement. Les dispositifs selon l'invention nécessitent donc moins d'entretien et reviennent moins chers à l'utilisateur.

Ce montage des segments de ramassage sur des pivots leur procure aussi plus de souplesse lorsqu'ils entrent en contact avec le fourrage, ce qui les rend moins agressifs à l'égard de ce dernier. En sus, chaque ressort tend à maintenir le segment auquel il est associé dans la position de travail afin d'augmenter la qualité et la propreté du ramassage.

D'autres caractéristiques et avantages de l'invention ressortiront de la description ci-après avec référence aux dessins annexés qui représentent, à titre d'exemple non limitatif, une forme de réalisation selon l'invention.

Dans ces dessins :
- La figure 1 représente une vue d'ensemble d'un dispositif de ramassage selon l'invention,
- La figure 2 représente, à plus grande échelle, une coupe selon un plan perpendiculaire à l'axe longitudinal du dispositif.

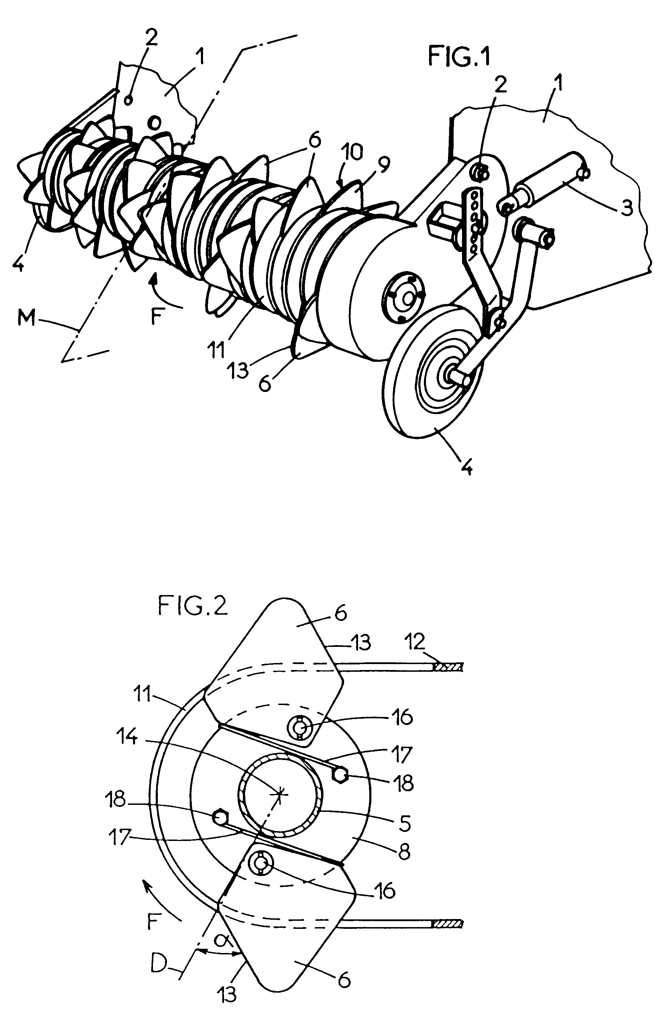

Le dispositif de ramassage selon l'invention constitue une partie intégrante d'une machine agricole telle qu'une presse, une ensileuse ou une remorque autochargeuse. Une telle machine est désignée par les repères (1) sur la figure 1. Ledit dispositif de ramassage est articulé sur la machine agricole (1) au moyen d'axes (2). Il peut être déplacé autour de ces axes (2) au moyen de vérins hydrauliques (3). De plus, de part et d'autre du dispositif de ramassage est prévue une roue de jauge (4) qui se déplace sur le sol. Ces roues (4) sont réglables en hauteur.

Tel que cela ressort des figures 1 et 2, le dispositif de ramassage comporte un arbre support (5) sensiblement horizontal qui peut être entraîné en rotation dans le sens de la flèche (F) autour de son axe longitudinal (14). Cet arbre est muni sur son pourtour de segments de ramassage (6) de forme sensiblement triangulaire, qui peuvent être réalisés en une matière souple ou une matière rigide. Ces segments (6) sont reliés à des flasques (8) solidaires de l'arbre support (5). Ils sont disposés de telle sorte que leurs plus grandes faces (9 et 10) s'étendent dans des plans sensiblement perpendiculaires à l'axe longitudinal de l'arbre support (5). Ces segments de ramassage (6) sont indépendants les uns des autres. Ils peuvent ainsi être remplacés individuellement en cas d'usure ou rupture accidentelle.

Chacun de ces segments de ramassage (6) est articulé sur un pivot (16) sensiblement parallèle à l'axe de rotation (14) de l'arbre support (5). Ces pivots (16) sont eux-mêmes fixés sur les flasques (8) de l'arbre support (5). Les segments (6) peuvent se déplacer autour de ces pivots (16) en direction dudit axe de rotation (14), lorsqu'ils rencontrent un obstacle. Ils se remettent automatiquement en place lorsque l'obstacle est franchi.

Dans l'exemple de réalisation représenté sur la figure 2, des lames ressorts (17) sont également fixées sur lesdits flasques (8) au moyen de boulons (18). Ces ressorts (17) exercent une pression sur les segments (6) de manière à les maintenir en position de travail. En cas de rencontre avec un obstacle, les segments (6) peuvent néanmoins pivoter autour des pivots (16), à l'encontre de la force des ressorts (17), de manière à réduire le frottement et le risque de déchirement. Les segments (6) peuvent ainsi être réalisés en un matériau rigide, vu qu'ils n'ont pas à subir de flexions durant le travail.

Chaque flasque (8) porte deux segments de ramassage (6) diamétralement opposés. On obtient ainsi une bonne complémentarité pour un ramassage de la totalité des produits se trouvant au sol. En effet, dans chaque plan, il y a pratiquement constamment un segment (6) en position de ramassage. Entre chaque plan, dans lequel se situent des segments de ramassage (6), sont prévues des glissières fixes (11) pour le guidage des produits déplacés. Celles-ci entourent en grande partie l'arbre support (5) et se raccordent à la partie supérieure à un tablier de réception (12) de la machine de récolte (1). Les flasques (8) et les pivots (16) se situent avantageusement à l'intérieur du volume délimité par les glissières (11) de manière à être protégés par ces dernières.

Comme cela est représenté sur la figure 1, les segments de ramassage (6) sont disposés sur le pourtour de l'arbre support (5) suivant des hélices symétriques par rapport au plan médian (M) du dispositif. Cette disposition permet une bonne répartition des segments (6) autour dudit arbre support (5) en vue d'un approvisionnement régulier de la machine de récolte en produits coupés.

Chaque segment de ramassage (6) comporte un côté actif (13) qui est avantageusement incliné dans la direction opposée au sens de rotation (F). Il forme ainsi un angle ($\alpha$) d'environ 60° avec une droite (D) dirigée radialement et passant par l'extrémité inférieure dudit côté actif (voir figure 2). Grâce à cette inclinaison, les segments (6) se retirent facilement des produits déposés sur le tablier (12). Dans ce même but, l'extrémité extérieure de chaque segment de ramassage (6) est arrondie. Au dégagement, les produits transportés glissent facilement sur cette partie arrondie. De plus, ces extrémités arrondies sont moins agressives à l'égard des produits fragiles tels que du foin sec et de la végétation restante.

Durant le travail, l'arbre support (5) avec les segments de ramassage (6) est entraîné en rotation dans le sens de la flèche (F). Ce entraînement est réalisé d'une manière connue en soi à partir de l'arbre de prise de force du tracteur d'entraînement (non représenté). Les moyens utilisés à cet effet sont généralement constitués par une chaîne ou une courroie disposée latéralement au dispositif et elle-même entraînée à partir d'un carter de renvoi prévu sur la machine de récolte.

En raison de cette rotation, les segments (6) ramassent les végétaux au sol, les élèvent et les déposent sur le tablier (12) de la machine de récolte. Celle-ci possède généralement des moyens tels que des griffes qui reprennent les produits ainsi ramassés.

Il est bien évident que l'on pourra encore apporter à l'exemple de réalisation décrit ci-dessus divers perfectionnements, modifications ou additions ou remplacer certains éléments par des éléments équivalents sans pour autant sortir du cadre de la présente invention tel que défini dans les revendications.

**Revendications**

1. Dispositif de ramassage de végétaux coupés se trouvant sur le sol, comportant notamment un arbre support (5) sensiblement horizontal, des segments de ramassage (6) fixés sur cet arbre et s'étendant dans des plans sensiblement perpendiculaires à son axe longitudinal (14), des moyens d'entraînement faisant tourner ledit arbre support autour de son axe longitudinal (14) durant le travail, les segments de ramassage (6) étant articulés sur des pivots (16) sensiblement parallèles à l'axe de rotation (14) de l'arbre support (5), caractérisé par le fait que les segments de ramassage (6) peuvent se déplacer autour de ces pivots (16) en direction dudit axe de rotation lorsqu'ils rencontrent un obstacle et qu'à chacun de ces segments de ramassage (6) est associé un ressort (17) qui exerce une pression sur lui de manière à le maintenir en position de travail.

**Claims**

1. A device for gathering cut vegetables lying on the ground, comprising especially an approximately horizontal support shaft (5), gathering segments (6) fastened to this shaft and extending in planes approximately perpendicular to its longitudinal axis (14), driving means intended to turn said support shaft around its longitudinal axis (14) during work, the gathering segments (6) being articulated on pivots (16) approximately parallel to the axis of rotation (14) of the support shaft (5), characterized in that the gathering segments (6) can move around these pivots (16) in the direction of said axis of rotation when encountering an obstacle and that to each of these gathering segments (6) is associated a spring (17) exerting a pressure on it in order to hold it in the working position.

**Patentansprüche**

1. Vorrichtung zum Aufnehmen von gemähten, sich auf dem Boden befindlichen Pflanzen, mit insbesondere einer nahezu horizontalen Tragwelle(5), Aufnahmesegmenten (6) die auf dieser Welle befestigt sind und sich in zu ihrer Längsachse (14) nahezu senkrechten Ebenen erstrecken, Antriebsmittel die diese Tragwelle während der Arbeit um ihre Längsachse (14) drehen lassen, wobei die Aufnahmesegmente (6) auf zu der Drehachse (14) der Tragwelle (5) nahezu parallelen Zapfen (16) angelenkt sind, dadurch gekennzeichnet, dass die Aufnahmesegmente (6) sich um diese Zapfen (16) in Richtung der Drehachse bewegen können wenn sie auf ein Hindernis stossen und dass jedem dieser Aufnahmesegmente (6) eine Feder (17) zugeordnet ist, welche einen Druck darauf ausübt um es in Arbeitsstellung zu halten.

FIG.1

FIG.2